# EUROPÄISCHE PATENTSCHRIFT

(11) **EP 4 452 689 B1**
(45) Veröffentlichungstag und Bekanntmachung des Hinweises auf die Patenterteilung: **19.02.2025**
(21) Anmeldenummer: 23709328.1
(22) Anmeldetag: 28.02.2023
(51) Int. Cl.: B60L 50/51, B60L 53/24, B60L 53/10

(54) **VERFAHREN ZUM BETRIEB EINES ELEKTRISCHEN ANTRIEBSSYSTEMS FÜR EIN FAHRZEUG**
METHOD FOR OPERATING AN ELECTRICAL DRIVE SYSTEM FOR A VEHICLE
PROCÉDÉ D'ACTIONNEMENT D'UN SYSTÈME D'ENTRAÎNEMENT ÉLECTRIQUE POUR VÉHICULE

(30) Priorität: 28.02.2022 DE 102022000711
(43) Veröffentlichungstag der Anmeldung: 30.10.2024
(73) Patentinhaber: Mercedes-Benz Group AG, 70372 Stuttgart (DE)
(72) Erfinder: HAUSSMANN, Moritz, 72622 Nürtingen (DE); WEIGOLD, Jörg, 70327 Stuttgart (DE); HEPP, Maximilian, 70178 Stuttgart (DE)
(74) Vertreter: Novagraaf Group
(86) Internationale Anmeldenummer: PCT/EP2023/054893
(87) Internationale Veröffentlichungsnummer: WO 2023/161497

(56) Entgegenhaltungen:
- WO-A1-2019/215128
- CN-A- 112 937 337
- DE-A1- 102018 124 789
- DE-A1- 102018 207 185
- US-A1- 2019 023 136
- US-A1- 2021 044 135

## Beschreibung

Die Erfindung betrifft ein Verfahren zum Betrieb eines elektrischen Antriebssystems für ein Fahrzeug nach den Merkmalen des Oberbegriffs des Anspruchs 1.

Aus dem Stand der Technik sind, wie in der DE 10 2018 000 488 A1 beschrieben, ein elektrisches Antriebssystem für ein Fahrzeug und ein Verfahren zu dessen Betrieb bekannt. Das elektrische Antriebssystem umfasst mindestens eine elektrische Drehstrommaschine und eine Batterie zur elektrischen Energieversorgung der elektrischen Drehstrommaschine. Die elektrische Drehstrommaschine ist über einen Inverter mit der Batterie elektrisch koppelbar oder gekoppelt, wobei ein Sternpunkt der elektrischen Drehstrommaschine mit einem Pluspolanschluss eines Gleichstromladeanschlusses des elektrischen Antriebssystems elektrisch koppelbar oder gekoppelt ist und ein Minuspol der Batterie mit einem Minuspolanschluss des Gleichstromladeanschlusses des elektrischen Antriebssystems elektrisch koppelbar oder gekoppelt ist.

Des Weiteren ist aus der DE 10 2018 124 789 A1 eine Ladevorrichtung zum Laden einer Batterie eines mit einem elektrischen Antriebsmotor ausgebildetem Kraftfahrzeugs, mit einer Induktivität und einem Antriebsumrichter bekannt. Der Antriebsumrichter wandelt im Antriebsbetrieb des Kraftfahrzeugs die Gleichspannung der Batterie für den elektrischen Antriebsmotor um, wobei die Induktivität zusammen mit dem Antriebsumrichter für einen Ladebetrieb der Batterie als Hochsetzsteller dient. Zudem ist eine Schalteinheit in der Ladevorrichtung vorgesehen, um bei dem Ladebetrieb eine Ladungsquelle direkt oder über den Hochsetzsteller mit der Batterie zu verschalten.

Der Erfindung liegt die Aufgabe zu Grunde, ein gegenüber dem Stand der Technik verbessertes Verfahren zum Betrieb eines elektrischen Antriebssystems für ein Fahrzeug anzugeben.

Die Aufgabe wird erfindungsgemäß gelöst durch ein Verfahren zum Betrieb eines elektrisches Antriebssystem für ein Fahrzeug mit den Merkmalen des Anspruchs 1.

Vorteilhafte Ausgestaltungen der Erfindung sind Gegenstand des Unteranspruchs.

Ein elektrisches Antriebssystem für ein Fahrzeug weist mindestens eine elektrische Drehstrommaschine, eine Batterie zur elektrischen Energieversorgung der elektrischen Drehstrommaschine und einen Inverter auf, über welchen die elektrische Drehstrommaschine mit der Batterie elektrisch koppelbar oder gekoppelt ist, wobei ein Sternpunkt der elektrischen Drehstrommaschine mit einem Pluspolanschluss eines Gleichstromladeanschlusses des elektrischen Antriebssystems elektrisch koppelbar oder gekoppelt ist und eine Minuspotentialleitung der Batterie mit einem Minuspolanschluss des Gleichstromladeanschlusses des elektrischen Antriebssystems elektrisch koppelbar oder gekoppelt ist.

Der Sternpunkt der elektrischen Drehstrommaschine ist über einen ersten Schalter mit dem Pluspolanschluss des Gleichstromladeanschlusses des elektrischen Antriebssystems elektrisch koppelbar oder gekoppelt, die Minuspotentialleitung der Batterie über einen zweiten Schalter mit dem Minuspolanschluss des Gleichstromladeanschlusses des elektrischen Antriebssystems elektrisch koppelbar oder gekoppelt und der Pluspolanschluss des Gleichstromladeanschlusses des elektrischen Antriebssystems über einen dritten Schalter mit einem Abgriff eines Zwischenkreiskondensator und damit darüber mit der Pluspotentialleitung elektrisch koppelbar oder gekoppelt.

Im erfindungsgemäßen Verfahren zum Betrieb des elektrischen Antriebssystems werden, wenn kein Laden der Batterie an einer fahrzeugexternen Gleichstromenergiequelle erfolgen soll, alle drei Schalter geöffnet, zum Laden der Batterie an einer fahrzeugexternen Gleichstromenergiequelle, deren bereitgestellte Gleichspannung einer Nennspannung der Batterie entspricht, der erste Schalter und der zweite Schalter geschlossen und der dritte Schalter geöffnet, und zum Laden der Batterie an einer fahrzeugexternen Gleichstromenergiequelle, deren bereitgestellte Gleichspannung kleiner ist als die Nennspannung der Batterie, alle drei Schalter geschlossen.

Durch die beschriebene Lösung wird ein Laden der Batterie über Induktivitäten der elektrischen Drehstrommaschine ermöglicht, wobei es hierbei ermöglicht wird, die Batterie sowohl an einer fahrzeugexternen Gleichstromenergiequelle zu laden, deren bereitgestellte Gleichspannung einer Nennspannung der Batterie von beispielsweise 800 V entspricht, als auch an einer fahrzeugexternen Gleichstromenergiequelle zu laden, deren bereitgestellte Gleichspannung kleiner ist als die Nennspannung der Batterie von beispielsweise 800 V, beispielsweise nur 400 V beträgt. Dabei ist für diese Lösung nur ein minimaler Aufwand erforderlich, so dass diese Lösung kostengünstig umsetzbar ist.

Zum Laden der Batterie an einer fahrzeugexternen Gleichstromenergiequelle, deren bereitgestellte Gleichspannung der Nennspannung der Batterie entspricht, werden, wie oben beschrieben, der erste Schalter und der zweite Schalter geschlossen und der dritte Schalter geöffnet. Über den geschlossenen ersten Schalter ist der Sternpunkt mit dem Pluspolanschluss des Gleichstromladeanschlusses und somit bei daran angeschlossener fahrzeugexterner Gleichstromenergiequelle mit deren Pluspol elektrisch gekoppelt. Über den geschlossenen zweiten Schalter ist die Minuspotentialleitung mit dem Minuspolanschluss des Gleichstromladeanschlusses und somit bei daran angeschlossener fahrzeugexterner Gleichstromenergiequelle mit deren Minuspol elektrisch gekoppelt. Bei am Gleichstromladeanschluss angeschlossener fahrzeugexterner Gleichstromenergiequelle, deren bereitgestellte Gleichspannung der Nennspannung der Batterie entspricht, sind somit der Sternpunkt und die Minuspotentialleitung mit dieser fahrzeugexternen Gleichstromenergiequelle elektrisch gekoppelt. Zusätzlich werden alle Transistoren eines Bereichs, insbesondere eines oberen Bereichs, des Inverters dauerhaft geschaltet, um die Batterie direkt mit der fahrzeugexternen Gleichstromenergiequelle elektrisch zu koppeln. Dadurch wird die Batterie mit der von der fahrzeugexternen Gleichstromenergiequelle bereitgestellten Gleichspannung, die der Nennspannung der Batterie entspricht, geladen.

Zum Laden der Batterie an einer fahrzeugexternen Gleichstromenergiequelle, deren bereitgestellte Gleichspannung kleiner ist als die Nennspannung der Batterie, beispielsweise nur 400 V beträgt, werden, wie oben beschrieben, alle drei Schalter geschlossen. Somit sind der Sternpunkt sowie die Minuspotentialleitung mit dem Gleichstromladeanschluss und somit bei daran angeschlossener fahrzeugexterner Gleichstromenergiequelle mit dieser elektrisch gekoppelt. Alle Transistoren des Inverters werden mit einer Pulsweitenmodulation betrieben und bilden in Kombination mit den Induktivitäten der elektrischen Drehstrommaschine einen Hochsetzsteller, um die von der fahrzeugexternen Gleichstromenergiequelle bereitgestellte niedrige Gleichspannung auf das Spannungsniveau der Batterie, d. h. auf deren Nennspannung von beispielweise 800 V, hochzusetzen. Alternativ können auch nur die Transistoren des anderen Bereichs, insbesondere eines unteren Bereichs, des Inverters getaktet werden, so dass ein Stromfluss nicht über die Transistoren des oberen Bereichs des Inverters, sondern über Freilaufdioden des oberen Bereichs des Inverters erfolgt. Zusätzlich ist der Zwischenkreiskondensator, wie oben beschrieben, vorteilhafterweise zweiteilig ausgeführt. Durch diese Anordnung kann der Mittelpunkt des Kondensators parallel zum Eingang der von der fahrzeugexternen Gleichstromenergiequelle bereitgestellten Gleichspannung geschaltet werden, um diese zu stabilisieren. Ein separater Eingangskondensator für den Ladebetrieb wird somit nicht benötigt.

In einer möglichen Ausführungsform sind zwei elektrisch in Reihe geschaltete Zwischenkreiskondensatoren vorgesehen.

Ausführungsbeispiele der Erfindung werden im Folgenden anhand von Zeichnungen näher erläutert.

Dabei zeigen:
- Fig. 1: schematisch ein elektrisches Antriebssystem für ein Fahrzeug in einem ersten Schaltzustand,
- Fig. 2: schematisch das elektrische Antriebssystem in einem zweiten Schaltzustand, und
- Fig. 3: schematisch das elektrische Antriebssystem in einem dritten Schaltzustand.

Einander entsprechende Teile sind in allen Figuren mit den gleichen Bezugszeichen versehen.

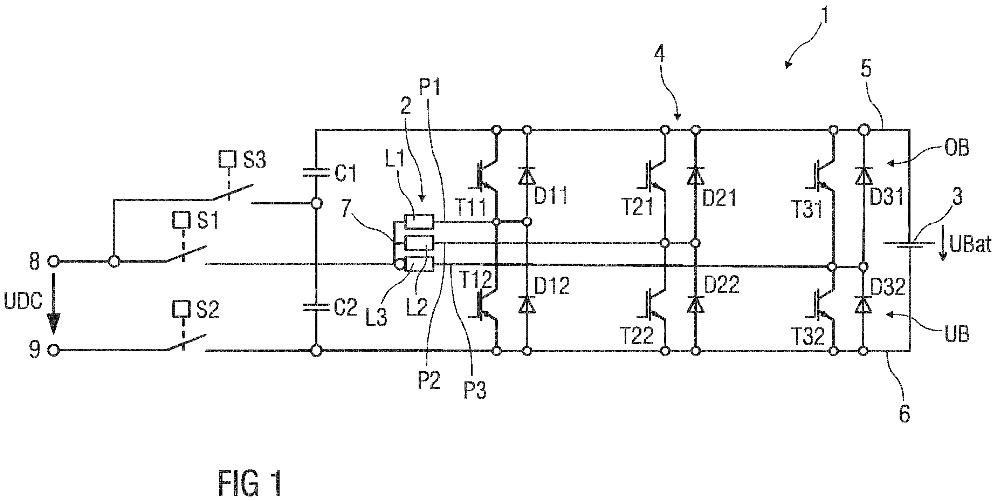

Die Figuren 1 bis 3 zeigen schematische Darstellungen eines elektrischen Antriebssystems 1 für ein Fahrzeug in drei verschiedenen Schaltzuständen.

Das elektrische Antriebssystem 1 weist eine elektrische Drehstrommaschine 2, eine Batterie 3 zur elektrischen Energieversorgung der elektrischen Drehstrommaschine 2 und einen Inverter 4 auf, über welchen die elektrische Drehstrommaschine 2 mit der Batterie 3 elektrisch koppelbar oder, wie in den Figuren 1 bis 3 gezeigt, gekoppelt ist. Hierzu ist der Inverter 4 über eine Pluspotentialleitung 5 und eine Minuspotentialleitung 6 mit der Batterie 3 elektrisch koppelbar oder, wie in den Figuren 1 bis 3 gezeigt, gekoppelt und über Phasenleiter P1, P2, P3 mit der elektrischen Drehstrommaschine 2 elektrisch koppelbar oder gekoppelt.

Der Inverter 4 weist elektrische Reihenschaltungen jeweils zweier Transistoren T11, T12, T21, T22, T31, T32 und jeweils zweier

Freilaufdioden D11, D12, D21, D22, D31, D32 auf, die zueinander elektrisch parallel geschaltet sind und jeweils mit der Pluspotentialleitung 5 und der Minuspotentialleitung 6 elektrisch gekoppelt sind. Die Phasenleiter P1, P2, P3 sind jeweils mit der elektrischen Drehstrommaschine 2 und einer Verbindungsleitung zwischen jeweils einem Paar der elektrisch in Reihe geschalteten Transistoren T11, T12, T21, T22, T31, T32 und der elektrisch in Reihe geschalteten Freilaufdioden D11, D12, D21, D22, D31, D32 elektrisch gekoppelt. Die auf einer Seite dieser Kopplungspunkte der Phasenleiter P1, P2, P3 angeordneten Transistoren T11, T21, T31 und Freilaufdioden D11, D21, D31 bilden einen, hier oberen, Inverterbereich OB und die auf der anderen Seite dieser Kopplungspunkte der Phasenleiter P1, P2, P3 angeordneten Transistoren T12, T22, T32 und Freilaufdioden D12, D22, D32 bilden einen, hier unteren, Inverterbereich UB. Eine Durchlassrichtung der Freilaufdioden D11, D12, D21, D22, D31, D32 ist jeweils in Richtung der Pluspotentialleitung 5 ausgerichtet.

Die Pluspotentialleitung 5 und die Minuspotentialleitung 6 sind zudem mit zwei elektrisch in Reihe geschalteten Zwischenkreiskondensatoren C1, C2 elektrisch gekoppelt, die elektrisch parallel zum Inverter 4 geschaltet sind. D. h. die hier beschriebene Lösung umfasst einen in zwei Zwischenkreiskondensatoren C1, C2 geteilten Zwischenkreiskondensator.

Ein Sternpunkt 7 der elektrischen Drehstrommaschine 2 ist über einen, als Schütz ausgebildeten, ersten Schalter S1 mit einem Pluspolanschluss 8 eines Gleichstromladeanschlusses des elektrischen Antriebssystems 1 elektrisch koppelbar oder gekoppelt, je nachdem, ob der erste Schalter S1 geöffnet oder geschlossen ist.

Die Minuspotentialleitung 6 ist über einen, als Schütz ausgebildeten zweiten Schalter S2 mit einem Minuspolanschluss 9 des Gleichstromladeanschlusses des elektrischen Antriebssystems 1 elektrisch koppelbar oder gekoppelt, je nachdem, ob der zweite Schalter S2 geöffnet oder geschlossen ist.

Der Pluspolanschluss 8 des Gleichstromladeanschlusses des elektrischen Antriebssystems 1 ist zudem über einen, als Schütz ausgebildeten, dritten Schalter S3 mit einer Verbindungsleitung der beiden Zwischenkreiskondensatoren C1, C2 elektrisch koppelbar oder gekoppelt, je nachdem, ob der dritte Schalter S3 geöffnet oder geschlossen ist, und somit im geschlossenen Zustand des dritten Schalters S3 über einen der beiden Zwischenkreiskondensatoren C1, C2, hier über den ersten Zwischenkreiskondensator C1, mit der Pluspotentialleitung 5 elektrisch gekoppelt.

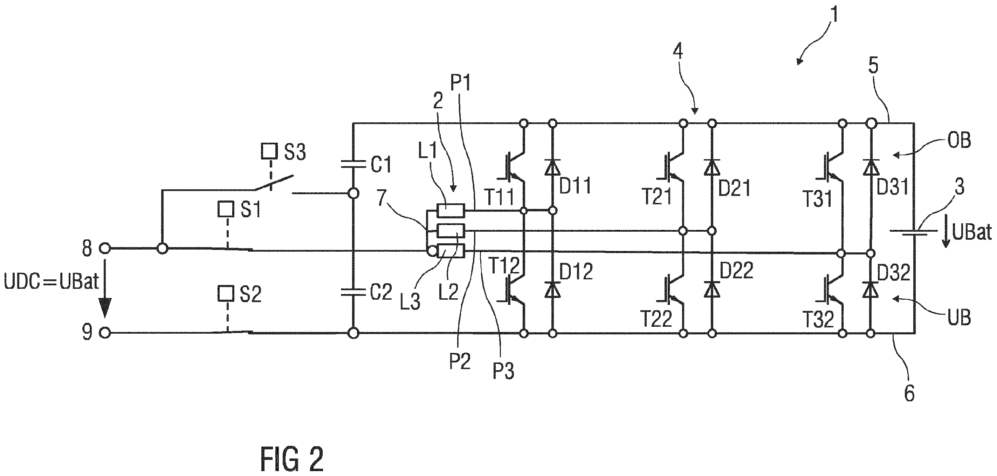

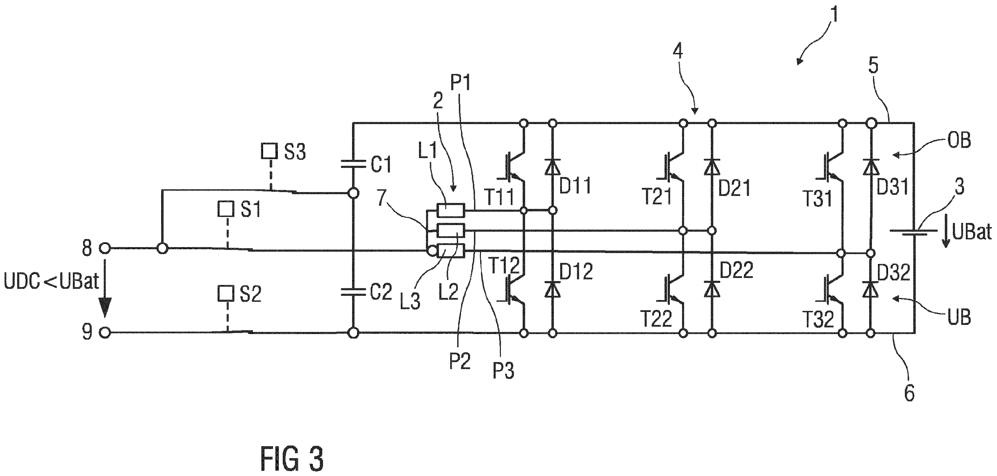

Durch die beschriebene Lösung wird ein Laden der Batterie 3 über Induktivitäten L1, L2, L3 der elektrischen Drehstrommaschine 2 ermöglicht, wobei es hierbei ermöglicht wird, die Batterie 3 sowohl an einer fahrzeugexternen Gleichstromenergiequelle zu laden, deren bereitgestellte Gleichspannung UDC einer Nennspannung UBat der Batterie 3 von beispielsweise 800 V entspricht, wie in Figur 2 gezeigt, als auch an einer fahrzeugexternen Gleichstromenergiequelle zu laden, deren bereitgestellte Gleichspannung UDC kleiner ist als die Nennspannung UBat der Batterie 3, wie in Figur 3 gezeigt. Dabei ist für diese Lösung nur ein minimaler Aufwand erforderlich, so dass diese Lösung kostengünstig umsetzbar ist.

In Figur 1 sind alle drei Schalter S1, S2, S3 geöffnet. Dieser Schaltzustand ist vorteilhafterweise immer dann vorgesehen, wenn kein Laden oder noch kein Laden an einer fahrzeugexternen Gleichstromenergiequelle erfolgen soll. Durch die geöffneten Schalter S1, S2, S3 sind sowohl der Pluspolanschluss 8 als auch der Minuspolanschluss 9 des Gleichstromladeanschlusses vom Rest des elektrischen Antriebssystems 1, insbesondere von der Batterie 3, dem Inverter 4 und der elektrischen Drehstrommaschine 2, elektrisch entkoppelt, so dass keine Gefahr besteht, dass eine Person über den Gleichstromladeanschluss mit der hohen und dadurch gesundheitsgefährdenden Nennspannung UBat der Batterie 3 in Kontakt kommt. Sollte am Gleichstromladeanschluss bereits eine Gleichspannung UDC anliegen, beispielsweise weil dieser bereits mit der fahrzeugexternen Gleichstromenergiequelle elektrisch gekoppelt ist, erfolgt bei geöffneten Schaltern S1, S2, S3 noch kein Laden der Batterie 3 mittels der fahrzeugexternen Gleichstromenergiequelle.

Dieser Schaltzustand ist auch für einen Fahrbetrieb des Fahrzeugs vorgesehen. Während des Fahrbetriebs wird die elektrische Drehstrommaschine 2 von der Batterie 3 über den Inverter 4 mit elektrischer Energie versorgt.

In Figur 2 sind der erste Schalter S1 und der zweite Schalter S2 geschlossen und der dritte Schalter S3 ist geöffnet. Dieser Schaltzustand ist zum Laden der Batterie 3 an einer fahrzeugexternen Gleichstromenergiequelle, deren bereitgestellte Gleichspannung UDC der Nennspannung UBat der Batterie 3 von beispielsweise 800 V entspricht, vorgesehen. Über den geschlossenen ersten Schalter S1 ist der Sternpunkt 7 mit dem Pluspolanschluss 8 des Gleichstromladeanschlusses und somit bei daran angeschlossener fahrzeugexterner Gleichstromenergiequelle mit deren Pluspol elektrisch gekoppelt. Über den geschlossenen zweiten Schalter S2 ist die Minuspotentialleitung 6 mit dem Minuspolanschluss 9 des Gleichstromladeanschlusses und somit bei daran angeschlossener fahrzeugexterner Gleichstromenergiequelle mit deren Minuspol elektrisch gekoppelt. Bei am Gleichstromladeanschluss angeschlossener fahrzeugexterner Gleichstromenergiequelle, deren bereitgestellte Gleichspannung UDC der Nennspannung UBat der Batterie 3 von beispielsweise 800 V entspricht, sind somit der Sternpunkt 7 und die Minuspotentialleitung 6 mit dieser fahrzeugexternen Gleichstromenergiequelle elektrisch gekoppelt. Zusätzlich werden alle Transistoren T11, T21, T31 des einen Bereichs, hier des oberen Bereichs OB, des Inverters 4 dauerhaft geschaltet, um die Batterie 3 direkt mit der fahrzeugexternen Gleichstromenergiequelle elektrisch zu koppeln. Dadurch wird die Batterie 3 mit der von der fahrzeugexternen Gleichstromenergiequelle bereitgestellten Gleichspannung UDC, die der Nennspannung UBat der Batterie 3 entspricht, geladen.

In Figur 3 sind alle drei Schalter S1, S2, S3 geschlossen. Dieser Schaltzustand ist zum Laden der Batterie 3 an einer fahrzeugexternen Gleichstromenergiequelle, deren bereitgestellte Gleichspannung UDC kleiner ist als die Nennspannung UBat der Batterie 3 von beispielsweise 800 V, vorgesehen. Beispielsweise beträgt die von der fahrzeugexternen Gleichstromenergiequelle bereitgestellte Gleichspannung UDC 400 V. Über den geschlossenen ersten Schalter S1 ist der Sternpunkt 7 mit dem Pluspolanschluss 8 des Gleichstromladeanschlusses und somit bei daran angeschlossener fahrzeugexterner Gleichstromenergiequelle mit deren Pluspol elektrisch gekoppelt. Über den geschlossenen zweiten Schalter S2 ist die Minuspotentialleitung 6 mit dem Minuspolanschluss 9 des Gleichstromladeanschlusses und somit bei daran angeschlossener fahrzeugexterner Gleichstromenergiequelle mit deren Minuspol elektrisch gekoppelt. Zusätzlich ist über den geschlossenen dritten Schalter S3 der Pluspolanschluss 8 des Gleichstromladeanschlusses und somit bei daran angeschlossener fahrzeugexterner Gleichstromenergiequelle deren Pluspol mit der Verbindungsleitung der beiden Zwischenkreiskondensatoren C1, C2 und somit über einen der beiden Zwischenkreiskondensatoren C1, C2, hier über den ersten Zwischenkreiskondensator C1, mit der Pluspotentialleitung 5 elektrisch gekoppelt.

Bei am Gleichstromladeanschluss angeschlossener fahrzeugexterner Gleichstromenergiequelle, deren bereitgestellte Gleichspannung UDC kleiner ist als die Nennspannung UBat der Batterie 3 von beispielsweise 800 V, sind somit der Sternpunkt 7 und die Minuspotentialleitung 6 mit dieser fahrzeugexternen Gleichstromenergiequelle elektrisch gekoppelt und zusätzlich ist die Verbindungsleitung der beiden Zwischenkreiskondensatoren C1, C2 und somit über einen der beiden Zwischenkreiskondensatoren C1, C2, hier über den ersten Zwischenkreiskondensator C1, die Pluspotentialleitung 5 mit dieser fahrzeugexternen Gleichstromenergiequelle elektrisch gekoppelt. Alle Transistoren T11, T12, T21, T22, T31, T32 des Inverters 4 werden mit einer Pulsweitenmodulation betrieben und bilden in Kombination mit den Induktivitäten L1, L2, L3 der elektrischen Drehstrommaschine 2 einen Hochsetzsteller, um die von der fahrzeugexternen Gleichstromenergiequelle bereitgestellte niedrige Gleichspannung UDC auf das Spannungsniveau der Batterie 3, d. h. auf deren Nennspannung UBat von beispielweise 800 V, hochzusetzen. Alternativ können auch nur die Transistoren T12, T22, T32 des anderen Bereichs, hier des unteren Bereichs UB, des Inverters 4 getaktet werden, so dass ein Stromfluss nicht über die Transistoren T11, T21, T31 des oberen Bereichs OB des Inverters 4, sondern über die Freilaufdioden D11, D21, D31 des oberen Bereichs OB des Inverters 4 erfolgt. Zusätzlich ist der Zwischenkreiskondensator, wie bereits erwähnt, zweiteilig ausgeführt, in Form der beiden Zwischenkreiskondensatoren C1, C2. Durch diese Anordnung kann der Mittelpunkt des Kondensators parallel zum Eingang der von der fahrzeugexternen Gleichstromenergiequelle bereitgestellten Gleichspannung UDC geschaltet werden, um diese zu stabilisieren. Ein separater Eingangskondensator für den Ladebetrieb wird somit nicht benötigt.

### Bezugszeichenliste

- 1: Antriebssystem
- 2: Drehstrommaschine
- 3: Batterie
- 4: Inverter
- 5: Pluspotentialleitung
- 6: Minuspotentialleitung
- 7: Sternpunkt
- 8: Pluspolanschluss
- 9: Minuspolanschluss

- C1, C2: Zwischenkreiskondensator
- D11, D12, D21, D22, D31, D32: Freilaufdiode
- L1, L2, L3: Induktivität
- OB, UB: Inverterbereich
- P1, P2, P3: Phasenleiter
- S1, S2, S3: Schalter
- T11, T12, T21, T22, T31, T32: Transistor
- UBat: Nennspannung der Batterie
- UDC: Gleichspannung der Gleichstromenergiequelle

## Patentansprüche

1. Verfahren zum Betrieb eines elektrischen Antriebssystems (1),
welches mindestens eine elektrische Drehstrommaschine (2), eine Batterie (3) zur elektrischen Energieversorgung der elektrischen Drehstrommaschine (2) und einen Inverter (4), über welchen die elektrische Drehstrommaschine (2) über eine Pluspotentialleitung (5) und eine Minuspotentialleitung (6) mit der Batterie (3) elektrisch gekoppelt ist, aufweist,
wobei ein Sternpunkt (7) der elektrischen Drehstrommaschine (2) mit einem Pluspolanschluss (8) eines Gleichstromladeanschlusses des elektrischen Antriebssystems (1) und somit mit einer daran angeschlossenen fahrzeugexternen Gleichstromenergiequelle zum Laden der Batterie (3) an der fahrzeugexternen Gleichstromenergiequelle elektrisch koppelbar ist und die Minuspotentialleitung (6) der Batterie (3) mit einem Minuspolanschluss (9) des Gleichstromladeanschlusses des elektrischen Antriebssystems (1) und somit mit der daran angeschlossenen fahrzeugexternen Gleichstromenergiequelle zum Laden der Batterie (3) an der fahrzeugexternen Gleichstromenergiequelle elektrisch koppelbar ist, und
- der Sternpunkt (7) der elektrischen Drehstrommaschine (2) über einen ersten als Schütz ausgebildeten Schalter (S1) mit dem Pluspolanschluss (8) des Gleichstromladeanschlusses des elektrischen Antriebssystems (1) elektrisch koppelbar ist
- die Minuspotentialleitung (6) der Batterie (3) über einen zweiten als Schütz ausgebildeten Schalter (S2) mit dem Minuspolanschluss (9) des Gleichstromladeanschlusses des elektrischen Antriebssystems (1) elektrisch koppelbar ist,
- der Pluspolanschluss (8) des Gleichstromladeanschlusses des elektrischen Antriebssystems (1) über einen dritten als Schütz ausgebildeten Schalter (S3) mit einem Abgriff eines Zwischenkondensators (C1) und über den Zwischenkondensator (C1) mit der Pluspotentialleitung (5) elektrisch koppelbar ist,
**dadurch gekennzeichnet, dass**
- wenn kein Laden der Batterie (3) an der fahrzeugexternen Gleichstromenergiequelle erfolgen soll, alle drei Schalter (S1, S2, S3) geöffnet sind,
- zum Laden der Batterie (3) an einer fahrzeugexternen Gleichstromenergiequelle, deren bereitgestellte Gleichspannung (UDC) einer Nennspannung (UBat) der Batterie (3) entspricht, der erste Schalter (S1) und der zweite Schalter (S2) geschlossen werden und der dritte Schalter (S3) geöffnet wird,
- zum Laden der Batterie (3) an einer fahrzeugexternen Gleichstromenergiequelle, deren bereitgestellte Gleichspannung (UDC) kleiner ist als die Nennspannung (UBat) der Batterie (3), alle drei Schalter (S1, S2, S3) geschlossen werden.

2. Verfahren nach Anspruch 1,
**dadurch gekennzeichnet, dass**
im elektrischen Antriebssystems (1) zwei elektrisch in Reihe geschaltete Zwischenkreiskondensatoren C1, C2 vorgesehen sind.

## Claims

1. A method for operating an electric drive system (1),
which has at least one three-phase electric machine (2), one battery (3) for supplying electrical energy to the three-phase electric machine (2) and one inverter (4) via which the three-phase electric machine (2) is electrically coupled to the battery (3) via a positive potential line (5) and a negative potential line (6),
wherein a star point (7) of the three-phase electric machine (2) can be electrically coupled to a positive pole connection (8) of a direct current charging connection of the electric drive system (1) and therefore to a direct current energy source connected thereto outside the vehicle for charging the battery (3) at the direct current energy source outside the vehicle, and the negative potential line (6) of the battery (3) can be electrically coupled to a negative pole connection (9) of the direct current charging connection of the electric drive system (1) and therefore to the direct current energy source connected thereto outside the vehicle for charging the battery (3) at the direct current energy source outside the vehicle, and
- the star point (7) of the three-phase electric machine (2) can be electrically coupled to the positive pole connection (8) of the direct current charging connection of the electric drive system (1) via a first switch (S1) designed as a contactor
- the negative potential line (6) of the battery (3) can be electrically coupled to the negative pole connection (9) of the direct current charging connection of the electric drive system (1) via a second switch (S2) designed as a contactor
- the positive pole connection (8) of the direct current charging connection of the electric drive system (1) can be electrically coupled to a tap of an intermediate capacitor (C1) via a third switch (S3) designed as a contactor and to the positive potential line (5) via the intermediate capacitor (C1),
**characterized in that**
- if the battery (3) is not to be charged at the direct current energy source outside the vehicle, all three switches (S1, S2, S3) are open,
- to charge the battery (3) at a direct current energy source outside the vehicle whose provided direct voltage (UDC) corresponds to a nominal voltage (UBat) of the battery (3), the first switch (S1) and the second switch (S2) are closed and the third switch (S3) is opened,
- to charge the battery (3) from a direct current energy source outside the vehicle whose provided direct voltage (UDC) is lower than the nominal voltage (UBat) of the battery (3), all three switches (S1, S2, S3) are closed.

2. The method according to claim 1,
**characterized in that**
two intermediate circuit capacitors C1, C2 connected electrically in series are provided in the electric drive system (1).

## Revendications

1. Procédé permettant de faire fonctionner un système d'entraînement électrique (1),
lequel présente au moins une machine électrique triphasée (2), une batterie (3) pour l'alimentation en énergie électrique de la machine électrique triphasée (2) et un onduleur (4) par l'intermédiaire duquel la machine électrique triphasée (2) est couplée électriquement à la batterie (3) par l'intermédiaire d'une ligne de potentiel positif (5) et d'une ligne de potentiel négatif (6),
dans lequel un point neutre (7) de la machine électrique triphasée (2) peut être couplé électriquement à une borne de pôle positif (8) d'une borne de charge à courant continu du système d'entraînement électrique (1) et ainsi à une source d'énergie à courant continu externe au véhicule qui y est raccordée, pour charger la batterie (3) sur la source d'énergie à courant continu externe au véhicule, et la ligne de potentiel négatif (6) de la batterie (3) peut être couplée électriquement à une borne de pôle négatif (9) de la borne de charge à courant continu du système d'entraînement électrique (1) et donc à la source d'énergie à courant continu externe au véhicule qui y est raccordée, pour charger la batterie (3) à la source d'énergie à courant continu externe au véhicule, et
- le point neutre (7) de la machine électrique triphasée (2) peut être couplé électriquement, par l'intermédiaire d'un premier interrupteur (S1) conçu en tant que contacteur, à la borne de pôle positif (8) de la borne de charge à courant continu du système d'entraînement électrique (1)
- la ligne de potentiel négatif (6) de la batterie (3) peut être couplée électriquement, par l'intermédiaire d'un deuxième interrupteur (S2) conçu en tant que contacteur, à la borne de pôle négatif (9) de la borne de charge à courant continu du système d'entraînement électrique (1)
- la borne de pôle positif (8) de la borne de charge à courant continu du système d'entraînement électrique (1) peut être couplée électriquement, par l'intermédiaire d'un troisième interrupteur (S3) conçu en tant que contacteur, à une prise d'un condensateur intermédiaire (C1) et, par l'intermédiaire du condensateur intermédiaire (C1), à la ligne de potentiel positif (5),
**caractérisé en ce que**
- si aucune charge de la batterie (3) ne doit être effectuée sur la source d'énergie à courant continu externe au véhicule, les trois interrupteurs (S1, S2, S3) sont ouverts,
- pour charger la batterie (3) à une source d'énergie à courant continu externe au véhicule, dont la tension continue (UDC) fournie correspond à une tension nominale (UBat) de la batterie (3), le premier interrupteur (S1) et le deuxième interrupteur (S2) sont fermés et le troisième interrupteur (S3) est ouvert,
- pour charger la batterie (3) à une source d'énergie à courant continu externe au véhicule, dont la tension continue (UDC) fournie est inférieure à la tension nominale (UBat) de la batterie (3), les trois interrupteurs (S1, S2, S3) sont fermés.

2. Procédé selon la revendication 1,
**caractérisé en ce que**
deux condensateurs de circuit intermédiaires (C1, C2) montés électriquement en série sont prévus dans le système d'entraînement électrique (1).
